(19) **Europäisches Patentamt**

**European Patent Office**

**Office européen des brevets**

(11) Veröffentlichungsnummer : **0 348 447 B1**

## (12) EUROPÄISCHE PATENTSCHRIFT

(45) Veröffentlichungstag der Patentschrift :
**03.06.92 Patentblatt 92/23**

(21) Anmeldenummer : **88908661.7**

(22) Anmeldetag : **12.10.88**

(86) Internationale Anmeldenummer :
**PCT/CH88/00188**

(87) Internationale Veröffentlichungsnummer :
**WO 89/03608 20.04.89 Gazette 89/09**

(51) Int. Cl.⁵ : **H02M 3/156**

(54) **VERFAHREN UND VORRICHTUNG ZUM VERHINDERN DER ZERSTÖRENDEN EINWIRKUNG VON TRANSIENTEN AUF EINEN SCHALTREGLER (BUCK CELL).**

(30) Priorität : **15.10.87 CH 4033/87**

(43) Veröffentlichungstag der Anmeldung :
**03.01.90 Patentblatt 90/01**

(45) Bekanntmachung des Hinweises auf die
Patenterteilung :
**03.06.92 Patentblatt 92/23**

(84) Benannte Vertragsstaaten :
**AT CH DE FR GB IT LI NL SE**

(56) Entgegenhaltungen :
**EP-A- 0 205 630**
**WO-A-84/00085**
**DE-A- 3 534 913**

(73) Patentinhaber : **Ascom Hasler AG**
**Belpstrasse 23**
**CH-3000 Bern 14 (CH)**

(72) Erfinder : **KISLOVSKI, André**
**Sensebrucke 1**
**CH-3176 Neuenegg (CH)**

(74) Vertreter : **Schwerdtel, Eberhard, Dr.**
**Ascom Tech AG Gewerblicher Rechtsschutz**
**Freiburgstrasse 370**
**CH-3018 Bern (CH)**

EP 0 348 447 B1

## Beschreibung

Die Erfindung betrifft ein Verfahren und eine Vorrichtung zum Verhindern der zerstörenden Einwirkung von Einschaltstössen und anderen Störungen (Transienten) auf die Funktiontüchtigkeit eines Schaltreglers (buck cell).

Schaltregler nach dem Prinzip der Buck-cell sind bekannt, beispielsweise aus der Schrift WO 84/00085 oder EP 0111 493. Sie arbeiten mit einem Leistungsschalter, der im geregelten Rhythmus ein- und ausgeschaltet wird, wodurch einer Speicherdrossel periodisch Energie zugeführt und von dieser anschliessend an einen Speicherkondensator und der hierzu parallel geschalteten Last abgegeben wird.

Das Prinzip des Schaltreglers und die Art seiner Regelung ist sehr einfach und robust. Der Schaltregler kann jedoch bei extremen Arbeitsbedingungen Schaden erleiden, insbesondere durch Zerstörung seines Leistungsschalters. Solche Bedingungen treten vor allem bei Kurzschlüssen an seinem Ausgang und beim Einschalten auf. Ganz allgemein reagiert der bekannte Schaltregler zu langsam und ungeeignet auf schnelle Veränderungen, d.h. auf sogenannte Transienten.

Die Aufgabe der Erfindung besteht nun darin, eine Methode anzugeben, wie der bekannte Schaltregler gegenüber den geschilderten Extremsituationen und damit gegen Beschädigungen oder gar Zerstörungen bei seinem Betrieb, wirkungsvoll und einfach geschützt werden kann.

Die Lösung dieser Aufgabe wird durch die unabhängigen Ansprüche angegeben. Die abhängigen Ansprüche geben Ausgestaltungen der Erfindung an.

Die Lösung zeichnet sich dadurch aus, dass der Schaltregler unter allen Arbeitsbedingungen optimal arbeitet. Störend kurze Schaltzeiten werden grundsätzlich vermieden Desgleichen werden übergrosse Ströme beim Auftreten von Transienten und auch bei länger anhaltenden Störungen sicher verhindert.

Im folgenden wird die Erfindung anhand von sechs Figuren beispielsweise näher beschrieben.

Es zeigen:

Fig. 1 - Blockschaltbild eines Durchflusswandlers
Fig. 2 - Blockschaltbild einer Regelkreiseinheit
Fig. 3 - Blockschaltbild einer Notsteuerung
Fig. 4 - Zeitdiagramm des Stromes in der Speicherdrossel
Fig. 5 - Zweites Zeitdiagramm
Fig. 6 - Weiteres Blockschaltbild einer Notsteuerung.

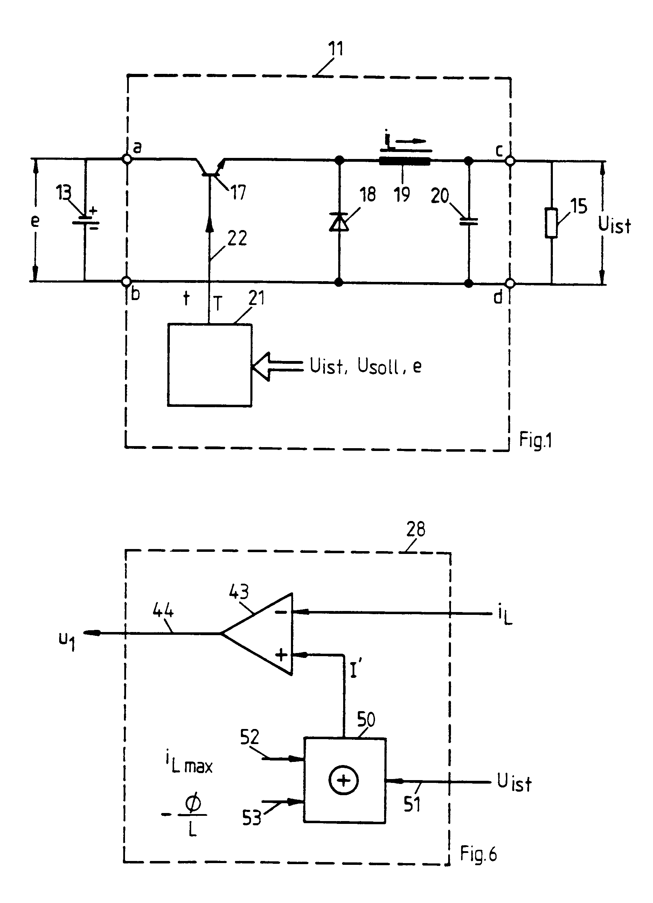

Fig. 1 zeigt das Blockschaltbild eines Schaltreglers 11 bzw. einer Buck-Cell, wie es nach dem Stand der Technik bekannt ist, z.B. aus der genannten Schrift W084/00085. Der Schaltregler 11 umfasst einen Schalter 17, insbesondere als Schalttransistor ausgebildet, eine Freilaufdiode 18, eine Speicherdrossel 19, einen Speicherkondensator 20 und eine Regelkreiseinheit 21.

Der Schaltregler 11 ist mit seinen Eingangspolen a, b an eine Spannungsquelle 13 angeschlossen, die eine Eingangsspannung e abgibt. Diese Spannung e ist eine Gleichspannung, die jedoch relativ rasch und stark schwanken kann. An die Ausgangspole c, d des Schaltreglers 11 ist ein Verbraucher 15 angeschlossen, der als ohmscher Widerstand dargestellt ist und an dem die geregelte Ausgangsspannung $U_{ist}$ anliegt.

Die Regelkreiseinheit 21 liefert über ihren Ausgang 22 Schaltsignale an den Schalter 17, durch den dieser jeweils während eines Periodenintervalls T für ein Einschaltintervall t eingeschaltet und für den Rest des Periodenintervalls T ausgeschaltet wird. Die Regelkreiseinheit 21 erhält als Regelgrössen vor allem die jeweils an den Ausgangspolen c, d anliegende Ist-Spannung $U_{ist}$, eine frei wählbare Soll-Spannung $U_{soll}$ und die Eingangsspannung e zugeführt. Aufgrund der Eingangsspannung e werden die Einschaltintervalle t so geregelt, dass das Produkt t·e konstant ist. Weitgehend unabhängig hiervon werden die Periodenintervalle T so geregelt, dass $U_{ist}$ gleich $U_{soll}$ wird. Praktische Werte für t und T sind 10 bis 20 µs bzw. 50 bis 300 µs.

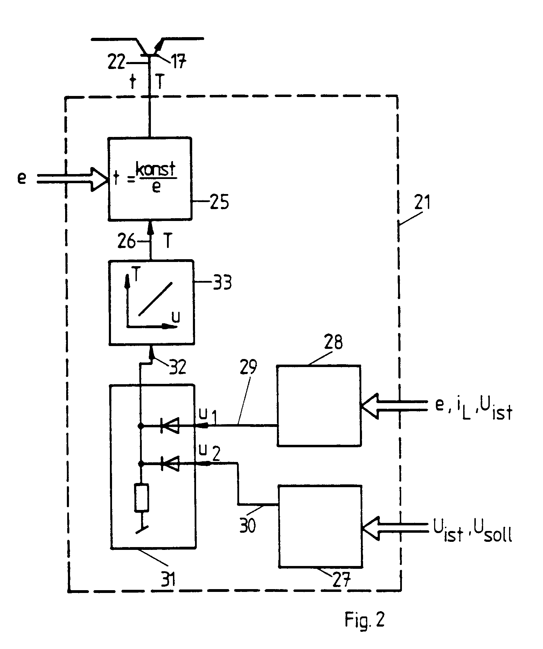

Fig. 2 zeigt ein detaillierteres Blockschaltbild der Regelkreiseinheit 21, die über ihren Ausgang 22 wie beschrieben Einschaltintervalle t und Periodenintervalle T an den Schalter 17 abgibt. Die Einheit 21 umfasst einen monostabilen Multivibrator 25, einen Regler 27, eine Notsteuerung 28, einen Prioritätskreis 31 und einen Spannung/Frequenz-Wandler 33.

Dem monostabilen Multivibrator 25 wird als Steuergrösse die Eingangspannung e zugeführt. Jedesmal wenn an seinem Eingang 26 ein Triggersignal auftritt, kippt er in seine Arbeitslage und nach einer Intervallzeit t = konst/e zurück in seine Ruhelage. Hierdurch bleibt das Produkt e·t konstant, was für den Gesamtregelprozess vorteilhaft und an sich bekannt ist. Ein Multivibrator 25 der genannten Art ist ebenfalls an sich bekannt, z.B. aus der genannten Schrift WO 84/00085. Der Regler 27 ist beispielsweise als Differenzverstärker aufgebaut, dem die Regel- und Stellgrössen $U_{ist}$ und $U_{soll}$ zugeführt werden, der Spannung/Frequenz-Wandler 33 als kommerzieller VCO - Baustein (voltage controlled oscillator).

Die Einheiten 27, 33 und 25 bilden einen herkömmlichen und bekannten Regelkreis, mittels dessen die Ausgangsspannung $U_{ist}$ auf den Sollwert $U_{soll}$ dadurch geregelt wird, dass aufgrund der jeweiligen Abweichun-

gen von $U_{ist}$ und $U_{soll}$ über den Spannung/Frequenz-Wandler 33 die Länge der Periodenintervalle T variiert wird, während die jeweiligen Einschaltintervalle t im wesentlichen konstant bleiben, einzig beeinflusst durch die während eines Periodenintervalls T nur unmerklich schwankende Eingangspannung e.

Diesem bekannten Regelkreis ist nun erfindungsgemäss über den Prioritätskreis 31 die Notsteuerung 28 beigeordnet. Der in an sich bekannter Weise aus zwei Dioden und einem Widerstand aufgebaute Prioritätskreis 31 gibt an seinem Ausgang 32 jeweils die grössere der an seinen Eingängen 29 und 30 anliegenden Spannungen $u_1$ bzw. $u_2$ ab. Im allgemeinen ist die Spannung $u_2$ am Ausgang des Reglers 27 grösser als $u_1$, wodurch der Regelkreis wie beschrieben arbeitet. Ist jedoch die Spannung $U_{ist}$ wesentlich kleiner als $U_{soll}$, was stets beim Einschalten des Schaltreglers 11 kurzfristig der Fall ist oder langfristig bei einem Kurzschluss an den Ausgangspolen c, d, dann überwiegt die Spannung $u_1$ am Ausgang der Notsteuerung 28 und diese dominiert das Geschehen.Die Notsteuerung 28 verhindert damit ein Arbeiten des Regelkreises unter für diesen Kreis ungünstigen Bedingungen. Der Notsteuerung 28 werden als Steuergrössen die Eingangsspannug e, die Ausgangsspannung $U_{ist}$ und der Strom $i_L$ durch die Speicherdrossel 19 zugeführt.

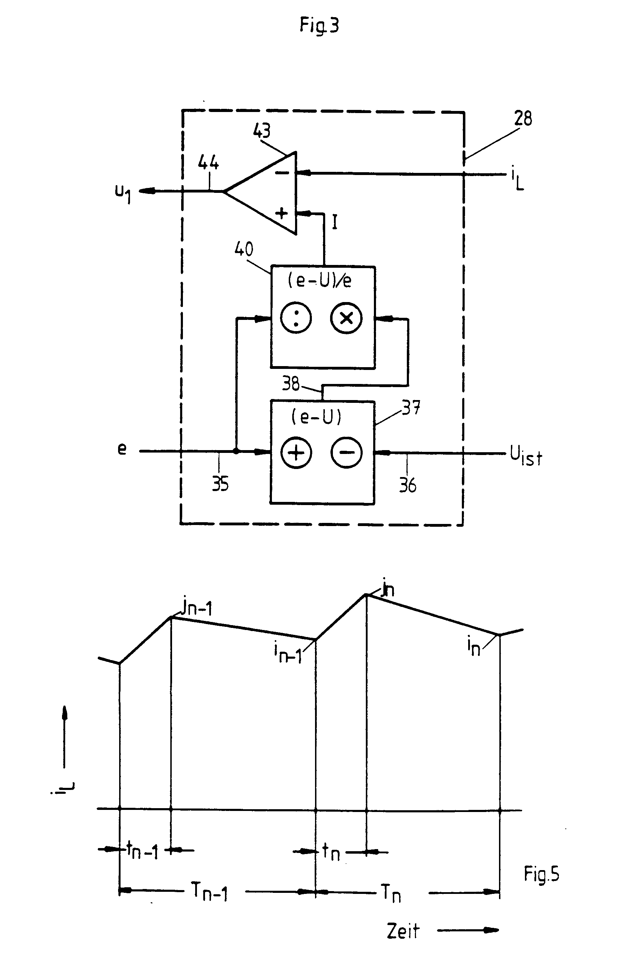

Fig. 3 zeigt ein weiter verfeinertes Blockschaltbild der Notsteuerung 28. Diese umfasst einen Addierer/Subtrahierer 37, einen Multiplizierer/Dividierer 40 und einen Vergleicher 43. Der Addierer/Subtrahierer 37 ist beispielsweise als Differenzverstärker ausgebildet. Seinem einen Eingang 35 wird die Eingangsspannung e zugeführt und seinem anderen Eingang 36 die Ausgangsspannung $U_{ist}$. An seinem Ausgang 38 erscheint ein Signal, das der Differenz (e - U) der genannten Spannungen entspricht. Im Multiplizierer/Dividierer 40, beispielsweise einem kommerziellen Baustein MPY 100 der Firma Burr-Brown, wird hieraus und aus der Eingangsspannung e ein Signal I gewonnen, das der Grösse (e - U)/e proportional ist und einem Strom entspricht. Im Vergleicher 43 wird schliesslich das Signal I mit dem jeweiligen Strom $i_L$ durch die Speicherdrossel 19 verglichen. Der Vergleicher 43, beispielsweise ausgebildet als Differnzverstärker, gibt an seinem Ausgang 44 die Spannung $u_1$ ab. $u_1$ ist stets grösser als $u_2$, wenn $i_L$ grösser als I ist.

Die Notsteuerung 28 ist in der beschriebenen Ausführung eine analog arbeitende Einheit, die über ihr Ausgangssignal $u_1$ die Dauer der Periodenintervalle T immer wieder so weit verlängern kann, dass sicher gestellt ist, das die Stromstärke $i_L$ durch die Speicherdrossel 19 während des jeweils nächsten Einschaltintervalls t einen vorbestimmten Wert nicht überschreitet. Sobald dieser vorbestimmte Wert eindeutig unterschritten wird, verliert die Notsteuerung 28 ihre dominierende Funktion und überlässt dem beschriebenen Regelkreis (Einheit 27, 33, 25) die Regelung der Ausgangsspannung $U_{ist}$. Die Notsteuerung 28 bleibt hierbei jedoch ständig in Betrieb und reagiert sehr rasch und jederzeit auf jedes einmalige Erreichen des genannten vorbestimmten Wertes.

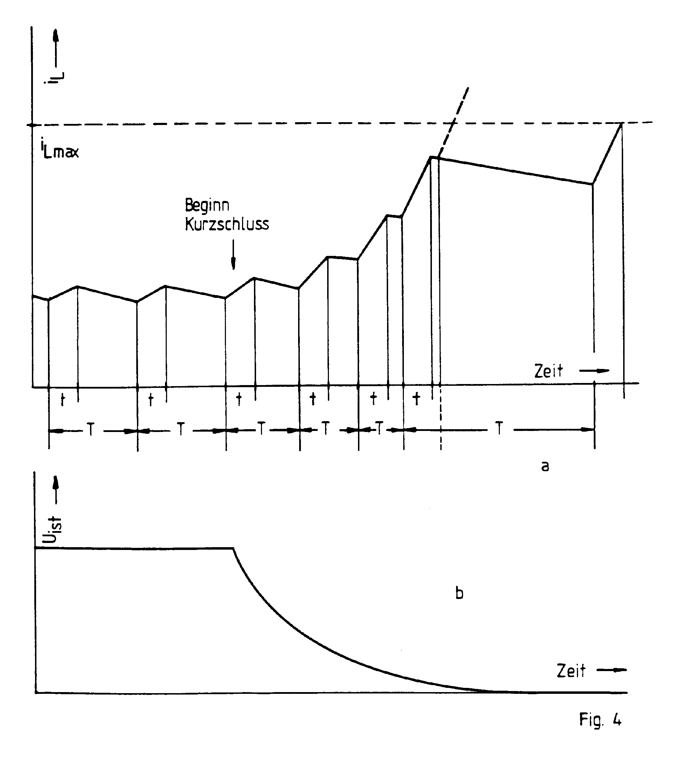

Fig. 4a zeigt das Zeitdiagramm des Stromes $i_L$ in der Speicherdrossel 19, Fig. 4b das zugeordnete Diagramm der Ausgangsspannung $U_{ist}$. Als Abszisse ist die Zeit, als Ordinate der Strom bzw. die Spannung aufgetragen. Im Rhythmus der Periodenintervalle T wird der Schalter 17 jeweils für ein (annähernd) gleich bleibendes Einschaltintervall t eingeschaltet. Den Rest des jeweiligen Periodenintervalls T bleibt der Schalter 17 ausgeschaltet. Während der Einschaltintervalle t steigt jeweils der Strom $i_L$ an, wobei die Speicherdrossel 19 mit Energie geladen wird. In der Restzeit entlädt sich die Drossel 19 teilweise wieder und der Strom $i_L$ sinkt ab. Bei gleichbleibender Spannung $U_{ist}$ am Verbraucher 15 variieren die Periodenintervalle T theoretisch nicht.

Tritt nun ein plötzlicher Kurzschluss am Verbraucher 15 auf, dann sinkt die Ausgangsspannung $U_{ist}$ sehr rasch gegen Null. Der Regelkreis (Einheit 27, 33, 25) verkürzt hierdurch die Dauer der Periodenintervalle T und der Strom $i_L$ steigt in kurzen Schritten und mit wachsender Geschwindigkeit stark an. Bevor in einem der Einschaltintervalle t der zulässige Maximalstrom $i_{max}$ überschritten würde, spricht die Notsteuerung am Ende des vorhergehenden Periodenintervalls T an und verlängert dieses Intervall T so lange, bis (vorausschauend) am Ende des auf diese Weise vorerst gesperrten Einschaltintervalls t der Maximalstrom $i_{max}$ gerade erreicht wird. Die nächsten Periodenintervalle T werden dann bezüglich ihrer Länge jeweils so gesteuert, dass jeweils am Ende der Einschaltintervalle t der Maximalstrom $i_{max}$ erreicht, nie jedoch überschritten wird. Die Notsteuerung 28 bildet damit eine Art vorausschauender Steuerung (predictor control). Sie "sagt" in jedem Periodenintervall T die Grösse des Maximalstromes $i_L$ im nächsten Intervall T voraus. Ist diese vorausgesehene Stromstärke zu hoch, dann reagiert die Notsteuerung 28 derart, dass das vorhergesehene Ereignis nicht eintrifft.

Das Verhalten und der Aufbau der Notsteuerung 28 lässt sich im einzelnen anhand von Fig. 5 erklären. Diese Figur zeigt ein weiteres Zeitdiagramm, das demjenigen von Fig. 4a entspricht. Auf der Abszisse sind zwei aufeinanderfolgende Periodenintervalle $T_{n-1}$ und $T_n$ und die zugeordneten Einschaltintervalle $t_{n-1}$ bzw. $t_n$ aufgetragen. Auf der Ordinate sind die maximalen Ströme $j_{n-1}$ und $j_n$ am Ende der Einschaltintervalle $t_{n-1}$, $t_n$ und die minimalen Ströme $i_{n-1}$ und $i_n$ am Ende der zugeordneten Periodenintervalle $T_{n-1}$, $T_n$ bzw. am Anfang des jeweils nachfolgenden Periodenintervalls $T_n$, $T_{n+1}$ angegeben. Der Strom schwankt im Ausschaltintervall $(T-t)_{n-1}$ zwischen $j_{n-1}$ und $i_{n-1}$ und im Einschaltintervall $t_n$ zwischen $i_{n-1}$ und $j_n$.

Wegen der Kürze der Intervalle sind im betrachteten Zeitraum die Eingangsspannung e und die Ausgangsspannung U als konstant zu betrachten. Desgleichen ist, wie anhand des Multivibrators 25 beschrieben, t.e konstant. Als Forderung wird angegeben, dass $j_n$ einen vorgegebenen Maximalstrom $j_{max}$ nicht überschreiten darf, also $j_n \leq j_{max}$.

Fig. 5 ist nun zu entnehmen, dass

$$j_n = j_{n-1} - (j_{n-1} - i_{n-1}) + (j_n - i_{i-1}). \quad (1)$$

Hieraus ergibt sich mittels des Induktionsgesetzes

$$j_n = i_{n-1} + \frac{e - U}{L} t_n \quad (L = \text{Induktivität der Speicherdrossel 19}) \quad (2)$$

Da $t \cdot e = \phi$ ($\phi$ = konst), lässt sich der Ausdruck umformen in

$$i_{n-1} = j_n - \frac{e - U}{e} \cdot \frac{\varnothing}{L} \quad (3)$$

Dieser Ausdurck wird durch die Schaltung von Fig. 3 nachgebildet und bedeutet, dass aus dem minimalen Stromwert $i_{n-1}$ des Periodenintervalls $T_{n-1}$ und dem Wissen um das Induktionsgesetz voraussagbar ist, ob im nachfolgenden Periodenintervall $T_n$ der maximal zulässige Strom überschritten wird oder nicht. Wird er nach der Vorhersage überschritten, dann muss das Periodenintervall $T_{n-1}$ so lange verlängert werden, bis $j_n = \frac{e - U}{e} \cdot \frac{\varnothing}{L}$ wird. Dies bedeutet, dass dann am Ende des nächsten Einschaltintervalls t gerade der Maximalstrom $i_{Lmax}$ erreicht wird, wie in Fig. 4 gezeigt.

Wird die Eingangsspannung e als grundsätzlich konstant auf ihrem Maximalwert $e_{max}$ angesehen, dann vereinfacht sich der Ausdruck (3) zu

$$i_{n-1} = j_n - \frac{\varnothing}{L} + \frac{U}{e_{max}} \cdot \frac{\varnothing}{L}. \quad (4)$$

Dieser Ausdruck gibt an, wie gross $j_{n-1}$ höchstens sein darf, damit bis zum Ende des jeweils nächsten Einschaltintervalls t der Strom $j_n$ den zulässigen Maximalstrom $i_{max}$ mit Sicherheit nicht überschreitet.

Fig. 6 zeigt ein weiteres Blockschaltbild für die Notsteuerung 28, die dem Ausdruck (4) entspricht. Bei dieser Variante der Notsteuerung 28 reduziert sich die Einheit 37 und 40 von Fig. 3 zu einem Summierer 50. Diesem wird über den Eingang 51 die variable Ausgangsspannung $U_{ist}$ und über die Eingänge 52, 53 die Konstanten $i_{Lmax}$ und $-\frac{\varnothing}{L}$ zugeführt. Das Ausgangssignal I'des Summierers 50 wird, wie anhand von Fig. 3 näher beschrieben, im Vergleicher 43 mit dem Strom $i_L$ verglichen. Sobald I'den Wert von $i_L$ übersteigt, übersteigt die Spannung $u_1$ am Ausgang 44 die Spannung $u_2$ am Ausgang 30 des Reglers 27 und die Notsteuerung 28 dominiert über den Prioritätskreis 31 den Schaltregler 11.

Das beschriebene Verfahren zum Verhindern der zerstörenden Einwirkung von Transienten auf den Schaltregler (11) ist einfach und arbeitet wie beschrieben in Art einer vorausschauenden Steuerung. Dadurch ist es sehr schnell und reagiert auch auf äusserst kurze Transienten, wirkt jedoch ebenfalls bei länger andauernden Störungen, z.B. bei Kurzschlüssen am Ausgang. Die dem Verfahren entsprechenden Schaltungen, insbesondere diejenige entsprechend Fig. 6, sind sehr einfach und mit kommerziellen Elektronikbausteinen problemlos aufbaubar.

## Patentansprüche

1. Verfahren zum Verhindern der zerstörenden Einwirkung von Einschaltstössen und anderen Störungen auf einen Schaltregler (11) (buck cell), wobei der Schaltregler (11) wenigstens einen Schalter (17), eine Freilaufdiode (18), eine Speicherdrossel (19), einen Speicherkondensator (20) und eine Schaltsteuerung (21) umfasst, wobei die Schaltsteuerung (21) den Schalter (17) während ununterbrochen aufeinanderfolgender Periodenintervalle (T) variabler Länge jeweils für ein annähernd konstantes Einschaltintervall (t) einschaltet, und wobei der Schaltregler (11) über Messgrössen wie Eingangsspannung (e), Ausgangsspannung ($U_{ist}$), Strom ($i_L$) durch die Speicherdrossel (19) und/oder andere geregelt wird, dadurch gekennzeichnet, dass vor beginn jedes Einschaltintervalls (t) mit Hilfe der jeweils aktuellen Werten wenigstens zweier der genannten Messgrössen ermittelt wird, ob während des jeweiligen Einschaltintervalls (t) das Überschreiten eines festgelegten Maximalstromes ($i_{max}$) durch die Speicherdrossel (19) zu erwarten oder nicht zu erwarten ist, und dass bei einem zu erwartenden Überschreiten der Schalter (17) so lange gesperrt wird, bis am Ende des endlich freigegebenen Einschaltintervalls (t) der Maximalstrom ($i_{max}$) höchstens erreicht wird.

2. Verfahren nach Anspruch 1, dadurch gekennzeichnet, dass die Ermittlung, ob ein Überschreiten des festgelegten Maximalstromes ($i_{max}$) zu erwarten oder nicht zu erwarten ist, mit Hilfe der jeweils aktuellen Werte der Messgrössen Eingangsspannung (e), Ausgangsspannung ($U_{ist}$) und Strom ($i_L$) durch die Speicherdrossel (19) mit Hilfe der beziehung [(Eingangsspannung (e) - Ausgangsspannung ($U_{ist}$))/Eingangsspannung (e)] -

Strom ($i_L$) erfolgt.

3. Verfahren nach Anspruch 1, dadurch gekennzeichnet, dass die Ermittlung, ob ein Überschreiten des festgelegten Maximalstromes ($i_{max}$) zu erwarten oder nicht zu erwarten ist, mit Hilfe der jeweils aktuellen Werte der Messgrössen Ausgangsspannung ($U_{ist}$) und Strom ($i_L$) durch die Speicherdrossel (19) sowie deren Differenz erfolgt.

4. Schaltungsanordnung zur Ausführung des Verfahrens nach Anspruch 1, gekennzeichnet durch einen monostabilen Multivibrator (25), dessen Kippzeit (t) umgekehrt proportional zur Eingangsspannung (e) ist, durch einen Spannung/Frequenz-Wandler (33) zur Abgabe von Einschaltsignalen an den Multivibrator (25), durch einen Prioritätskreis (31 ) zur Weitergabe der jeweils höheren von zwei Eingangsspannungen ($u_1$, $u_2$) an den Spannung/Frequenz-Wandler (33), durch einen Regler (27) zur bildung einer der Eingangsspannungen ($u_2$) durch Vergleich der jeweiligen Ist-Spannung ($U_{ist}$) mit der Soll-Spannung ($U_{soll}$), und durch eine Notsteuerung (28) zur bildung der anderen der Eingangspannungen ($u_1$) (Fig. 2).

5. Schaltungsanordnung nach Anspruch 4, dadurch gekennzeichnet, dass die Notsteuerung (28) einen Addierer/Subtrahierer (37), einen Multiplizierer/Dividierer (40) und einen Vergleicher (43) umfasst, derart, dass aus der Eingangsspannung (e) und der Ausgangsspannung ($U_{ist}$) ein Ausgangssignal (1) gebildet wird, das im Vergleich mit der Stromstärke ($i_L$) am Ausgang der Speicherdrossel (19) die andere der Eingangsspannungen ($u_1$) bildet (Fig. 3).

6. Schaltungsanordnung nach Anspruch 4, dadurch gekennzeichnet, dass die Notsteuerung (28) einen Summierer (50) und einen Vergleicher (43) umfasst, derart, dass aus der Ausgangsspannung ($U_{ist}$) ein Ausgangssignal (I') gebildet wird, das im Vergleich mit der Stromstärke ($i_L$) am Ausgang der Speicherdrossel (19) die andere der Eingangsspannungen ($u_1$) bildet (Fig. 6).

## Claims

1. Method for preventing the destructive action of transients and other disturbances on a switching regulator or buck cell (11), in which the buck cell (11) comprises at least one switch (17), a free-wheeling diode (18), a choke (19), a storage capacitor (20) and a control circuit (21), the latter switching on the switch (17) during uninterrupted, succeeding period intervals (T) of variable length for an approximately constant on period (t), in which the buck cell (11) is controlled by means of measured variables such as the input voltage (e), output voltage ($U_{actual}$), current ($i_L$) through the choke (19) and/or the like, characterized in that prior to the start of each on period t with the aid of the actual value of at least two of the said measured variables it is determined whether the exceeding of a fixed maximum current ($i_{max}$) through the choke (19) is to be expected or not during the on period and when it is expected to be exceeded the switch (17) is inhibited until at the end of the freed on period (t) the maximum current ($i_{max}$) is reached.

2. Method according to claim 1, characterized in that the determination as to whether the exceeding of the fixed maximum current ($i_{max}$) is to be expected or not takes place with the aid of the actual values of the measured variables input voltage (e), output voltage ($U_{actual}$) and current ($i_L$) through the choke (19) on the basis of the relationship [(input voltage (e) - output voltage ($U_{actual}$))/ input voltage (e)] - current ($i_L$).

3. Method according to claim 1, characterized in that the determination as to whether or not the fixed maximum current ($i_{max}$) is to be exceeded is carried out with the aid of the actual values of the measured variables output voltage ($U_{actual}$) and current ($i_L$) through the choke (19), as well as the difference thereof.

4. Circuit arrangement for performing the method according to claim 1, characterized by a monostable multivibrator (25), whose flip time (t) is inversely proportional to the input voltage (e), by a voltage/frequency converter (33) for supplging switch-on signals to the multivibrator (25), by a priority circuit (31) for feeding the in each case higher of two input voltages ($u_1$,$u_2$) to the voltage/frequency converter (33), by a controller (27) for forming one of the input voltages ($u_2$) by comparing the actual voltage ($U_{actual}$) with the desired voltage ($U_{desired}$) and by an emergency control device (28) for forming the other of the input voltages ($u_1$) (fig. 2).

5. Circuit arrangement according to claim 4, characterized in that the emergency control unit (28) comprises an adder/subtractor (37), a multiplier/divider (40) and a comparator (43), so that from the input voltage (e) and the output voltage ($U_{actual}$) an output signal (I) is formed which, in comparison with the current intensity ($i_L$) at the output of the choke (19), forms the other of the input voltages ($u_1$) (fig. 3).

6. Circuit arrangement according to claim 4, characterized in that the emergency control unit (28) comprises an adder (50) and a comparator (43), so that from the output voltage ($U_{actual}$) an output signal (I') is formed which, in comparison with the current intensity ($i_L$) at the output of the choke (19), forms the other of the input voltages ($u_1$) (fig. 6).

**Revendications**

1. Procédé pour empêcher les effets destructifs des impulsions dues au lancement d'un courant et autres dérangements sur un régulateur de commutation (11) (buckcell) dans lequel le régulateur de commutation (11) comprend au moins un commutateur (17), une diode à roue libre (18), une bobine d'accumulation (19), un condensateur d'accumulation (20) et une commande d'urgence (21), dans lequel la commande d'urgence (21) actionne le commutateur (17) pendant des intervalles de période se succédant de façon ininterrompue et de longueur variable (T) pour un intervalle d'enclenchement (t) approximativement constant et dans lequel le régulateur de commutation (11) est régulé par l'intermédiaire de grandeurs de mesure telles que la tension d'entrée (e), la tension de sortie ($U_{réelle}$), l'intensité ($i_L$) à travers la bobine d'accumulation (19) et/ou d'autres grandeurs, procédé caractérisé en ce qu'avant le début de chaque intervalle d'enclenchement (t) il est enregistré à l'aide des valeurs actuelles respectives d'au moins deux des grandeurs de mesure mentionnées, si pendant l'intervalle d'enclenchement respectif (t) on doit s'attendre ou ne pas s'attendre au dépassement d'une intensité maximale déterminée ($i_{max}$) à travers la bobine d'accumulation (19) et en ce que dans le cas où il faut s'attendre à un dépassement, le commutateur (17) reste bloqué jusqu'à ce qu'à la fin de l'intervalle d'enclenchement (t) finalement libéré l'intensité maximale ($i_{max}$) est au plus atteinte.

2. Procédé selon la revendication 1, caractérisé en ce que le fait de savoir s'il faut s'attendre ou ne pas s'attendre à un dépassement de l'intensité maximale déterminée ($i_{max}$), est obtenu à l'aide des valeurs respectives actuelles des grandeurs de mesure de tension d'entrée (e), tension de sortie ($U_{réelle}$) et intensité ($i_L$) à travers la bobine d'accumulation (19) à l'aide de la relation [(tension d'entrée (e)-tension de sortie ($U_{réelle}$))/tension d'entrée (e)] - Intensité ($i_L$).

3. Procédé selon la revendication 1, caractérisé en ce que le fait de savoir s'il faut s'attendre ou ne pas s'attendre à un dépassement de l'intensité maximale déterminée ($i_{max}$) est obtenu à l'aide des valeurs respectives actuelles des grandeurs de mesure tension de sortie ($U_{réelle}$) et intensité ($I_L$) à travers la bobine d'accumulation (19) ainsi que de leur différence.

4. Circuit pour la mise en oeuvre du procédé selon la revendication 1, caractérisé par: un multivibrateur monostable (25) dont le temps de basculement (t) est inversement proportionnel à la tension d'entrée (e), un convertisseur tension/fréquence (33) pour la délivrance de signaux d'enclenchement au multivibrateur (25), un circuit de priorité (31) pour transmission de la tension la plus élevée parmi les deux tensions d'entrée ($u_1$, $u_2$) au convertisseur tension/fréquence (33), un régulateur (27) pour la formation de l'une des tensions d'entrée ($u_2$) par comparaison de la tension réelle respective ($U_{réelle}$) avec la tension de consigne ($U_{cons}$) et une commande d'urgence (28) pour la formation de l'autre tension d'entrée ($u_1$) (figure 2).

5. Circuit selon la revendication 4, caractérisé en ce que la commande d'urgence (28) comprend un élément d'addition/soustraction (37), un élément de multiplication/division (40) et un comparateur (43), tels qu'à partir de la tension d'entrée (e) et de la tension de sortie ($U_{réelle}$) est formé un signal de sortie (I), qui par comparaison avec la valeur de l'intensité ($i_L$) à la sortie de a bobine d'accumulation (19) forme l'autre tension d'entrée ($u_1$) (figure 3).

6. Circuit selon la revendication 4, caractérisé en ce que la commande d'urgence (28) comprend un élément de sommation (50) et un comparateur (43) tels qu'à partir de la tension de sortie ($U_{réelle}$) est formé un signal de sortie (I'), qui par comparaison avec la valeur de l'intensité ($i_L$) à la sortie de la bobine d'accumulation (19) forme l'autre tension d'entrée ($u_1$) (figure 6).

Fig.1

Fig.6

Fig. 2

Fig.3

Fig.5

Fig. 4